# EUROPEAN PATENT APPLICATION

(11) **EP 1 873 097 A2**
(43) Date of publication of application: **02.01.2008**
(21) Application number: 07111075.3
(22) Date of filing: 26.06.2007
(51) Int. Cl.: B65H 3/52, B65H 1/06, B65G 59/06, B65H 5/02

(54) **Destacker for envelopes or flat wrapped objects**

(30) Priority: 27.06.2006 IT MI20061240
(71) Applicant: Ranza, Pierangelo, 28047 Oleggio (IT)
(72) Inventor: Ranza, Pierangelo, 28047 Oleggio (IT)
(74) Representative: Fisauli, Beatrice A. M.

(57) **Abstract**

The invention relate to a separating machine for envelopes and flat wrapped items, which are stacked or simply piled up, able to separate said items from one another and present them individually for packing.

Said machine is characterized by the fact of comprising a moving belt (3) on which items (2) are piled up untidily and one or more flaps are able to allow the passage of items (2a) which are in contact with said moving belt (3), and to prevent the passage of items (2b) which are not fully in contact with said moving belt (3), acting as an obstacle on the trajectory of said items (2b) which are not in contact with said moving belt (3).

## Description

This invention relates to a machine able to separate envelopes or items wrapped in plastic packaging, which are stacked or simply piled up, so that they can be packed.

For packing purposes, items are usually loaded onto a moving belt which conveys them and drops them into boxes or the like, or are individually loaded onto conveyor belts leading into sorting systems. However, this procedure requires the objects to be packed to be placed individually on the conveyor belt, otherwise they fall into the boxes untidily, and it is also difficult to establish their quantity.

Loading is currently performed manually by operators working on packaging or sorting lines.

The problem therefore arises of separating envelopes or items wrapped in plastic packaging which are stacked or simply piled up on a conveyor belt. In other words, it would be desirable to be able to load the conveyor belt in various ways, leaving the machine to separate the various items from one another so that they are presented individually for packing.

This invention achieves said purpose by offering a machine as claimed in claim 1, which is able to receive envelopes or items wrapped in plastic packaging, which are stacked or simply piled up, and to separate them, so that they are presented for packing in the correct position for insertion into suitable containers, such as boxes or the like, or installed in line with sorting units.

The machine according to the invention substantially comprises a moving belt or conveyor belt which slides on a support surface, above which is installed a set of flexible flaps able to separate items piled up on said belt from one another.

A strong vacuum is created in a given zone, namely at the point where the belt enters the areas in which the flaps are positioned, so as to pick up the items and space them evenly, thus ensuring that they cannot be moved without a precise command.

To create the vacuum, a tray is housed under the support surface on which the conveyor belt runs; said tray is hermetically attached to said support surface, which presents a number of longitudinal slits in the area in which the vacuum effect is created. The conveyor belt, which substantially consists of a belt made of non-stick material, contains a series of holes with a constant pitch along said longitudinal slits. This creates a suction effect through the longitudinal slits and the holes in the moving belt.

In view of the nature of the items handled, which are wide and flat, such as envelopes, only small adjustments to the height of the flaps are required, in view of their flexibility.

The vacuum effect created at the point where the belt enters the zone in which the flaps are positioned enables the items to be picked up. The set of flexible flaps installed in the zone above the zone in which the vacuum is created separates said items, so that there will only be single items, with a substantially constant distance between them, on the moving belt, at the exit from the zone in which the flexible flaps are positioned.

The flaps are height-adjustable to allow items of very different thicknesses to be handled.

Loading can be performed in two ways. The first method involves placing packs of envelopes on a conveyor belt, which automatically feeds the separating machine.

The second method involves loading packs of envelopes vertically with an automatic dispenser, which spreads said envelopes on the separating machine as soon as they reach a height threshold. The dispenser has multiple loading planes to ensure that the weight of the items on the surface of the separating machine is not too great, and that no difficulty arises in picking up the items because of their weight.

The separating machine according to the invention therefore allows single items to be presented for packing, starting from groups of items piled in a more or less random way on the conveyor belt.

The advantage deriving from the use of the machine according to the invention is consequently that wide, flat objects, such as envelopes and the like, can be correctly packed, starting from the same objects placed randomly, with an obvious reduction in human labour.

The invention will now be described according to a preferred embodiment, by way of example but not of limitation, with reference to the annexed figures, wherein:
- figure 1 shows a separating machine according to the invention;
- figure 2 shows the operating diagram of the separating machine;
- figure 3 shows means able to generate a vacuum which are installed under the support surface of the moving belt;
- figure 4 shows the input zone of the separating machine;
- figure 5 shows items piled up in the loading area;
- figures 6 (a, b) respectively show items piled up in the loading zone and the same items exiting individually;
- figure 7 schematically illustrates a loading device for the items to be separated.

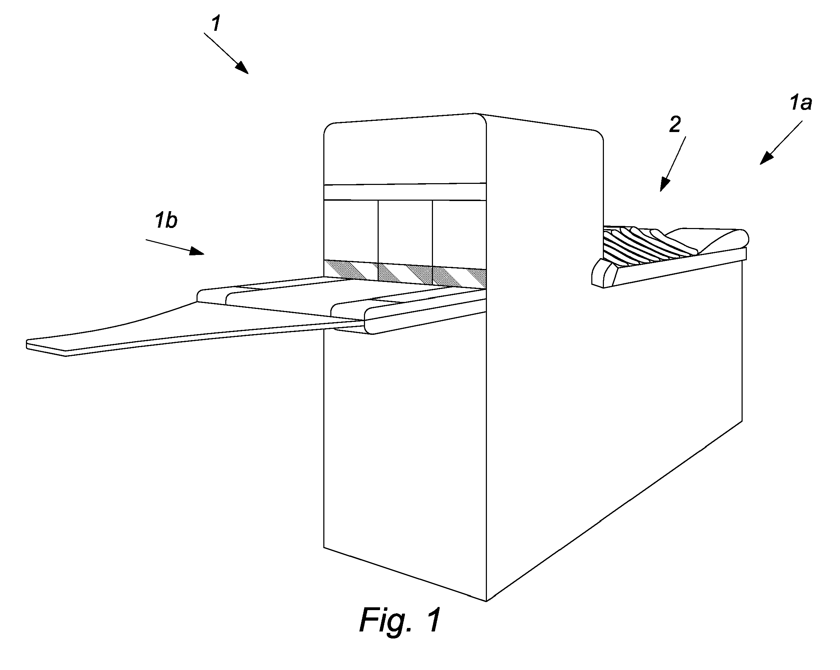

In fig. 1, (1) indicates a separating machine assembly according to the invention. Said figure shows a loading or input zone (1 a), wherein items (2) to be separated are loaded, and an output zone (1 b), from which items (2) exit individually.

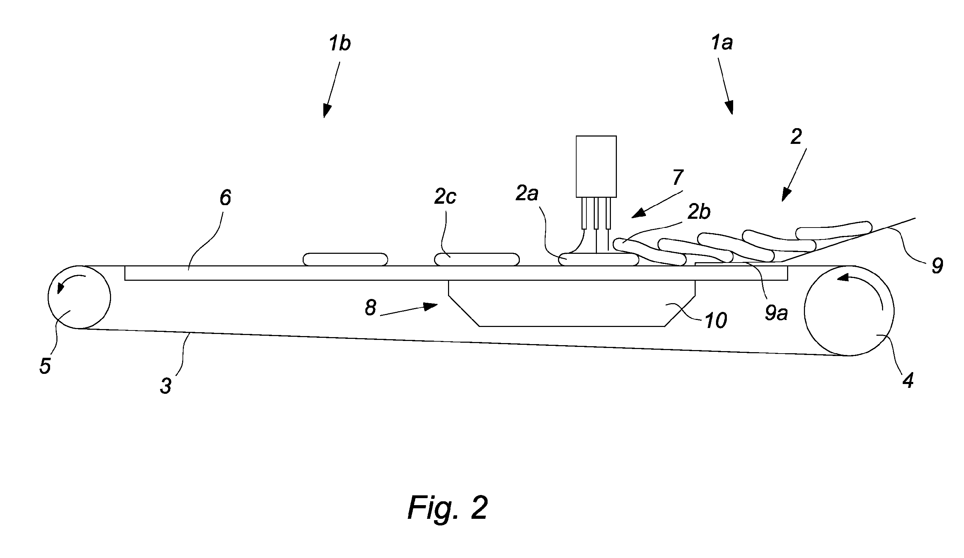

Fig. 2 shows an operating diagram of separating machine (1). Said separating machine (1) includes a moving belt (3) stretched between a drive roller (4) and an idle roller (5), that runs on a support surface (6), which said moving belt (3) cooperates with a system of flexible flaps (7) and is placed in a vacuum, in the way described below, by vacuum-generating means (8). Said separating machine (1) is completed by a chute (9) that terminates with a non-stick plate (9a), which has the function of aiding loading of items to be separated (2).

Flexible flaps (7) are preferably made of thermoplastic polyester, and are connected to their support, which is mounted on vertical guides that slide or in any event are perpendicular to the plane of the moving belt.

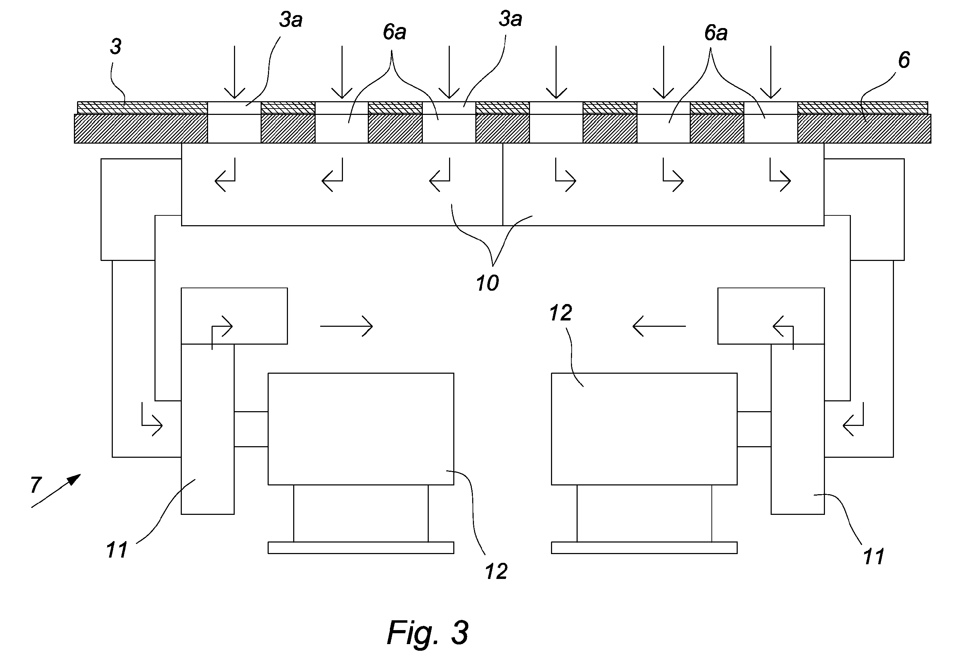

Said vacuum-generating means (8) are illustrated in fig. 3, which shows, according to a cross-section transverse to the direction of advance of moving belt (3), a pair of trays (10) fitted hermetically below said support surface (6), which said support surface presents a plurality of channels (6a). Moving belt (3), which contains a plurality of holes (3a) that match said channels (6a), runs on support surface (6). In this way, when a vacuum is produced in trays (10) by vacuum pumps (11) driven by electric motors (12), items (2) present on moving belt (3), which are flat, such as envelopes and the like, are sucked against said belt, so that they cannot easily slide on it.

Considerable suction power is obviously required, because numerous holes (3a) in moving belt (3) will generally not be closed by items above them. The vacuum-generating device will not be further described, as it is known to the prior art.

Fig. 2 clearly shows how items (2), piled up on moving belt (3) in loading zone (1 a), are drawn under flexible flaps (7) by said moving belt (3) and separated by said flaps so that they arrive separately at output zone (1b). In practice, when an item (2a), drawn along by moving belt (3) which moves in the direction indicated by the arrows, reaches flexible flaps (7), it is allowed to pass through said flaps if it is lying flat on moving belt (3), because it passes substantially under elastic flaps (7), which are suitably positioned in terms of height, possibly bending them slightly. Conversely, an item (2b), which is resting at least partly on item (2a), is blocked by flaps (7), because the resistance offered by said flaps exceeds the friction between said item (2b) and item (2a) beneath it.

The suction system obviously facilitates the operation because the friction between item (2a) and moving belt (3) is greatly increased. The result is that under these conditions, item (2a) is able to pass under flaps (7) by bending them, although they are positioned very close to moving belt (3). In this way flaps (7) will be more effective in retaining an item (2b) above item (2a).

In the simplest cases it may be sufficient to use a single flap; however, in order to increase their efficiency, the flaps will preferably be installed in a number of parallel rows, such as three parallel rows, with graduated heights, so that the last row encountered by items (2) is the closest to moving belt (3), while the other rows are progressively higher, as clearly shown in Fig. 2.

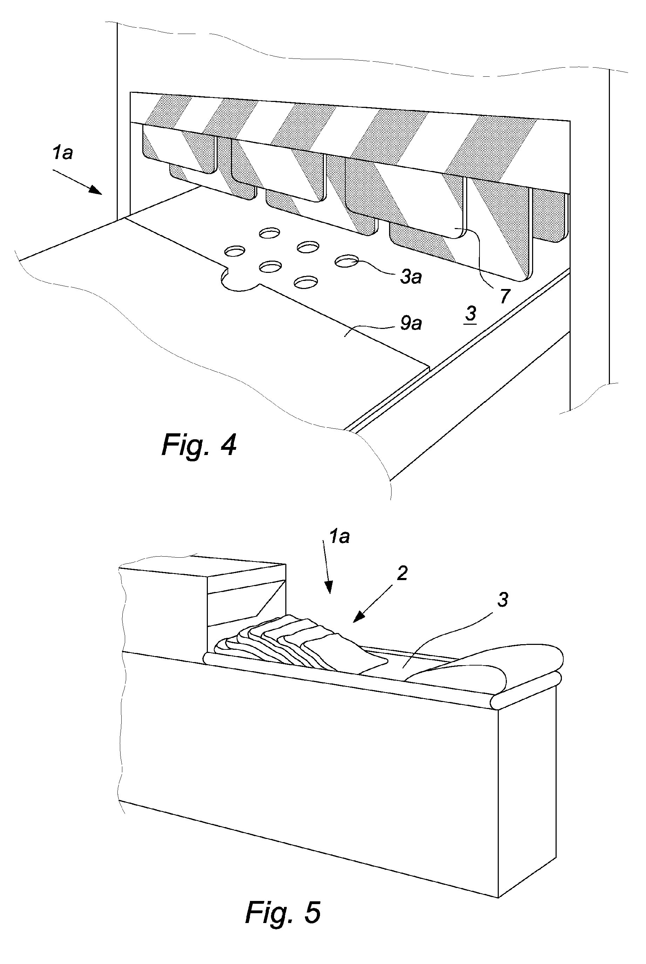

Fig. 4 shows the input zone (1a) of separating machine (1), namely the zone in which the items to be separated are loaded. Said figure also shows holes (3a) in moving belt (3), flexible flaps (7) and non-stick plate (9a). The function of non-stick plate (9a) is to improve the slide of items (2) towards input zone (1a); it is therefore preferably made of a low-friction material, such as polypropylene with a dimpled surface.

Fig. 5 shows items (2), piled up on moving belt (3), in loading zone (1 a).

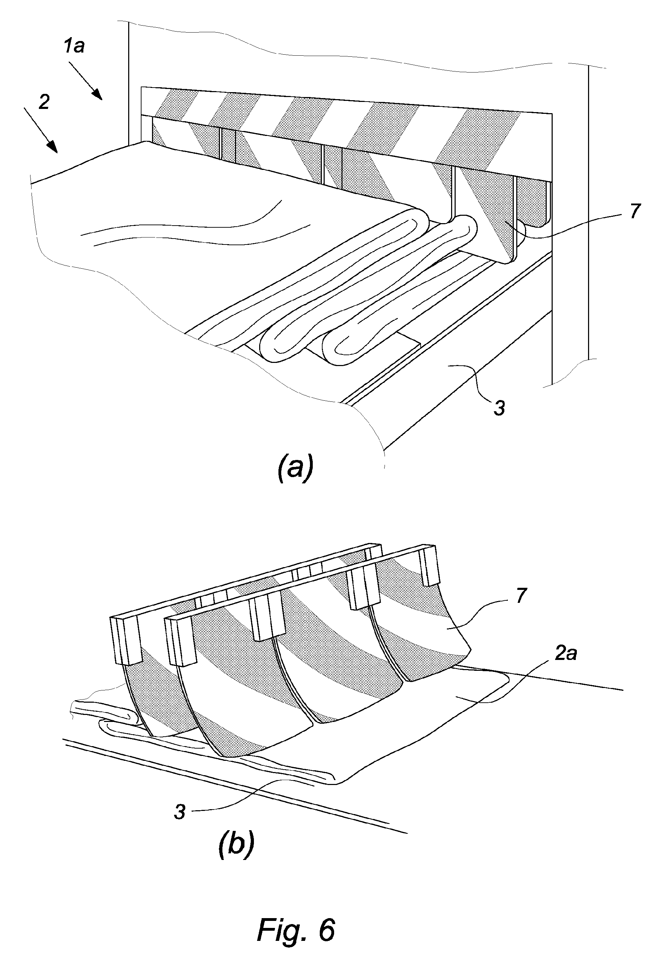

Fig. 6a shows input zone (1 a) of separating machine (1), with items to be separated (2), which are drawn by moving belt (3) against flaps (7). Fig. 6b shows items (2) exiting individually after bending flexible flaps (7).

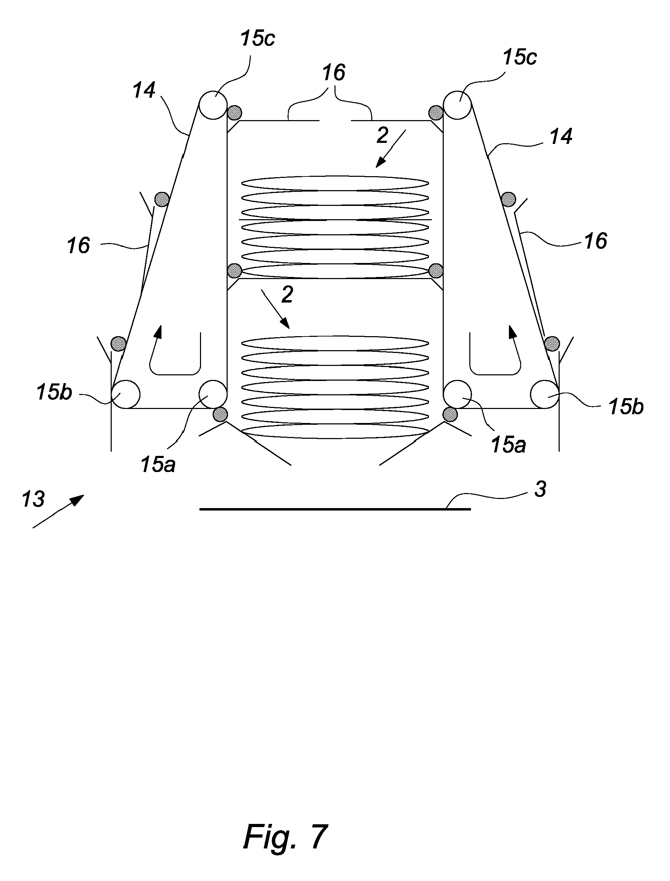

According to a preferred embodiment of the invention, separating machine (1) is associated with a loading device (13), illustrated schematically in fig. 7, which is able to deposit packs of items (2).

Said loading device (13) includes a pair of belts (14), of suitable width, which run on three rollers (15a, 15b, 15c). Mobile loading/unloading planes (16) are hinged to the surface of belts (14), at a constant pitch. The two belts (14) move simultaneously and at the same speed in the direction indicated by the arrows, and are synchronised in such a way that each of the mobile planes (16), mounted on one of belts (14), always corresponds to one of the mobile planes mounted on the other belt (14). When the two planes reach the lowest position, they gently unload envelopes (2) onto moving belt (3) in loading zone (1 a) of separating machine (1).

Loading device (13), which is positioned above separating machine (1) at loading zone (1 a), is loaded in turn onto the two upper mobile planes, as they descend. As the planes are a fixed distance apart, this determines the maximum number of items (2) which form a single pack; the number of items stacked is consequently limited, to prevent malfunctions caused by excessive friction between the items.

As is clear from the above description, the use of a separating machine according to the invention allows items to be separated and automatically packed into boxes, with a considerable reduction in time and cost, and without human labour.

The innovation has been described by way of example but not of limitation, according to a preferred form of embodiment. One skilled in the art could devise numerous other embodiments, all of which fall into the ambit of protection of the following claims.

## Claims

1. Separating machine for envelopes and flat wrapped items, which are stacked or simply piled up, able to separate said items from one another and present them individually for packing, **characterised in that** it includes first means able to convey said items (2) and second means, cooperating with said first means, able to separate said items (2) from one another.

2. Separating machine as claimed in claim 1, **characterised in that** said first means, able to convey said items (2), comprise a moving belt or conveyor belt (3).

3. Separating machine as claimed in claim 1, **characterised in that** said second means, cooperating with said first means and able to separate said items (2) from one another, comprise one or more flaps (7), installed above said moving belt (3) on which said items (2) are piled up untidily, said flaps being able to allow the passage of items (2a) which are in contact with said moving belt (3) and to prevent the passage of items (2b) which are not fully in contact with said moving belt (3), acting as an obstacle on the trajectory of said items (2b) which are not in contact with said moving belt (3).

4. Separating machine as claimed in claim 3, **characterised in that** said one or more flaps (7) are able to allow the passage of said items (2a) in contact with said moving belt (3), said flaps being positioned at a height that exceeds the thickness of said items (2a) which are in contact with said moving belt (3).

5. Separating machine as claimed in claim 3, **characterised in that** said one or more flaps (7) are able to allow the passage of said items (2a) in contact with said moving belt (3), by bending due to the thrust of said items (2a) conveyed by said moving belt (3), which said one or more flaps (7) are such that they can be bent sufficiently to allow the passage of said items (2a) by a force equal to the friction between said items (2a) and said moving belt (3) with which said items (2a) are in contact.

6. Separating machine as claimed in claims 3 to 5, **characterised in that** it includes two or more rows of flaps (7).

7. Separating machine as claimed in claims 3 to 6, **characterised in that** said flaps (7) are installed in three parallel rows, and graduated in height, so that the last row encountered by said items (2) is the closest to said moving belt (3), while the other rows are progressively higher.

8. Separating machine as claimed in claims 3 to 7, **characterised in that** said one or more flaps (7) are height-adjustable.

9. Separating machine as claimed in claims 3 to 7, wherein said one or more flaps (7) are made of polyester.

10. Separating machine as claimed in at least one of claims 1 to 9, **characterised in that** it includes a suction system (8) able to increase the friction between items (2a) and said moving belt (3).

11. Separating machine as claimed in claim 10, **characterised in that** said suction system (8) includes at least one tray (10), fitted hermetically below support surface (6), which contains a plurality of channels (6a), and that said moving belt (3) slides on said support surface (6) and contains a plurality of holes (3a) which correspond to said channels (6a), in such a way that when a vacuum is formed by vacuum pumps (11) in said at least one tray (10), items (2) present on moving belt (3), which are flat, such as envelopes and the like, are sucked by said vacuum.

12. Separating machine as claimed in at least one of claims 1 to 11, **characterised in that** it includes a plate (9a) made of non-stick material positioned substantially in contact with said moving belt (3) and close to a loading zone (1a) of said separating machine (1), said plate being able to improve the slide of said items (2) towards said loading zone (1 a).

13. Separating machine as claimed in at least one of claims 1 to 12, **characterised in that** it includes a loading device (13) comprising a pair of belts (14), which slide on rollers (15a, 15b, 15c), mobile loading/unloading planes (16) being hinged to the surface of said belts (14), which said belts (14) move simultaneously, in a synchronised way, so that each of said mobile planes (16), mounted on one of said belts (14), always corresponds to one of said mobile planes mounted on the other of said belts (14).
